(19) **Europäisches Patentamt**

**European Patent Office**

**Office européen des brevets**

(11) Veröffentlichungsnummer: **0 274 022 B1**

(12) **EUROPÄISCHE PATENTSCHRIFT**

(45) Veröffentlichungstag der Patentschrift: **24.04.91**

(21) Anmeldenummer: **87116475.2**

(22) Anmeldetag: **07.11.87**

(51) Int. Cl.⁵: **F16D 3/41**

(54) **Kreuzgelenk.**

(30) Priorität: **09.12.86 DE 3641956**

(43) Veröffentlichungstag der Anmeldung:
**13.07.88 Patentblatt 88/28**

(45) Bekanntmachung des Hinweises auf die
Patenterteilung:
**24.04.91 Patentblatt 91/17**

(84) Benannte Vertragsstaaten:
**ES FR GB IT SE**

(56) Entgegenhaltungen:
| | |
|---|---|
| EP-A- 0 194 184 | DE-A- 3 605 746 |
| GB-A- 2 057 633 | GB-A- 2 058 294 |
| GB-A- 2 120 751 | US-A- 1 492 351 |
| US-A- 2 212 763 | US-A- 3 159 013 |
| US-A- 3 222 143 | US-A- 4 575 361 |

(73) Patentinhaber: **Gelenkwellenbau Gesellschaft
mit beschränkter Haftung
Westendhof 5-9
W-4300 Essen 1(DE)**

(72) Erfinder: **Ende, Eberhard, Dipl.-Ing.
Im Stillen Winkel 60
W-4300 Essen 1(DE)**

(74) Vertreter: **Harwardt, Günther, Dipl.-Ing. et al
HARWARDT NEUMANN PATENTANWÄLTE
Scheerengasse 2 Postfach 1455
W-5200 Siegburg 2(DE)**

EP 0 274 022 B1

**Beschreibung**

Die Erfindung betrifft ein Kreuzgelenk, bestehend aus einer ersten und zweiten Gelenkgabel mit in den Enden der Gabelarme der Gelenkgabeln angeordneten Durchgangsbohrungen, deren Achsen in einer gemeinsamen Ebene liegen, einem vier rechtwinkelig zueinander in einer gemeinsamen Ebene angeordnete Zapfen aufweisenden Zapfenkreuz, auf den Zapfen unter Zwischenschaltung von Lagerkörpern angeordneten Lagerbüchsen, wobei jeweils zwei in einer Achse liegende Zapfen mit den Lagerbüchsen in den beiden Bohrungen der ersten Gelenkgabel und die anderen Zapfen mit den Lagerbüchsen in den beiden Bohrungen der zweiten Gelenkgabel aufgenommen und gesichert sind und die Zapfen von ihren Stirnflächen ausgehend und in Richtung auf das Zentrum des Zapfenkreuzes sich erstreckende Ausnehmungen aufweisen, welche bei gestrecktem Gelenk spiegelsymmetrisch zur Ebene, die die Drehachsen der Gelenkgabeln und der beiden zugehörigen Zapfen enthält, ausgebildet sind.

Bei derartigen Kreuzgelenken besteht das Problem, daß aufgrund der Struktur der Gabelarme in Radialschnittebenen der Bohrung zur Aufnahme der Lagerbüchsen ungleiche Querschnittsverhältnisse um die Bohrung herum und damit ungleiche Festigkeiten und Verformungsverhältnisse gegeben sind. Dies führt zu einer asymmetrischen und damit ungünstigen Lastverteilung insbesondere auf die Lagerbauteile des Kreuzgelenkes. Die Kraftübertragung geschieht überwiegend durch den Lagersektor, der dem steiferen Teil des Gabelarmes zuzuordnen ist. Der andere für die Umfangskraftübertragung zuständige Teil der Gelenklagerung wird aufgrund des höherelastischen Endes des Gabelarmes minderbelastet und hinsichtlich seiner Übertragungskapazität nicht voll ausgenutzt. Daraus folgt eine partielle Überlastung der Gelenkkreuzlagerung im steiferen Teil der Gabelarme der Gelenkgabel, verbunden mit einer deutlichen Lebensdauerreduzierung durch vorzeitige Materialermüdung.

Die Hauptrichtung der Kraftübertragung weicht also von der Drehmomentübertragungsrichtung ab, wodurch außerdem noch eine Kraftkomponente in Achsrichtung entsteht, die, weil sie außermittig zur Drehachse der jeweiligen Gelenkgabel wirksam ist, zu einer Entfernung der beiden Gabelarme voneinander führt.

Aus der GB 2 057 633 A ist es bereits bekannt, im Zapfen, ausgehend von dessen Stirnfläche eine Bohrung vorzusehen, die kegelig ausgebildet ist und deren größter Durchmesser im Bereich der Zapfenstirnfläche liegt. Hierdurch soll längs des Zapfens eine bessere Lastverteilung erzielt werden, damit die zur Lagerung vorgesehenen Nadeln über eine größere Länge an der Drehmomentübertragung teilhaben.

Der Erfindung liegt daher die Aufgabe zugrunde, die Lastverteilung in der Gelenkbaueinheit zu verbessern, d. h. eine möglichst gleichmäßige Verteilung anzustreben. ·

Diese Aufgabe wird erfindungsgemäß dadurch gelöst, daß daß die Ausnehmungen zur Zapfendrehachse jeweils in Richtung der verbundenen Enden der Gabelarme versetzt angeordnet sind. Dabei können die Ausnehmungen als gestufte zylindrische Bohrungen oder beispielsweise als konische Bohrungen ausgebildet sein. Der jeweils größte Durchmesser liegt dann in der Stirnfläche des zugehörigen Zapfens.

Alternativ ist es auch möglich, daß die Gabelarme in den einander zugewandten Flächen und/oder ihren Außenflächen eine durchgehende oder mehrere Ausnehmungen aufweisen, die jeweils spiegelsymmetrisch zur Ebene, die die Drehachsen der zugehörigen Gelenkgabel und der beiden Durchgangsbohrungen enthält, ausgebildet sind und in dem Flächenbereich angeordnet sind, der sich zwischen der Bohrungswandung und dem verbundenen Ende der Gabelarme erstreckt. Die Ausnehmungen können dabei als konzentrisch zur Achse der Durchgangsbohrung verlaufende Kreisringabschnitte oder als Schlitze ausgebildet sein, die von der Innenfläche bis zur Außenfläche der Gabelarme reichen.

Im Falle der Zuordnung der Ausnehmungen zu dem Zapfen sind diese also ausgehend von der die Achsen aller Zapfen enthaltenen Mittelebene des Zapfenkreuzes versetzt angeordnet, und zwar dergestalt, daß die Ausnehmungen die dem ersten Zapfenpaar, das eine gemeinsame Zapfenachse aufweist, zugeordnet sind, zur einen Seite versetzt sind, und die Ausnehmung des anderen Zapfenpaares hierzu entgegengesetzt versetzt zur Mittelebene angeordnet sind.

Die Form der Ausnehmungen ist beliebig und jeweils von Fall zu Fall festzulegen in Hinsicht auf die vorliegenden Belastungsverhältnisse.

Die symmetrische Ausführung sorgt dafür, daß gleiche Verhältnisse in beiden Drehrichtungen geschaffen werden. Die Lösung nach der Erfindung führt zu einer verbesserten radialen Lastverteilung durch Veränderung der Bauteile in ihrem elastischen Verhalten. Es wird insbesondere eine symmetrische Lastverteilung erzeugt, wobei die Stelle höchster Beanspruchung auch in Richtung der für die Drehmoment maßgebende Umfangskraft verlegt wird. Mit der verbesserten Lastverteilung geht auch eine Lebensdauersteigerung einher bzw umgekehrt kann für eine gewünschte Lebensdauer eine Optimierung der Bauteile und damit eine kompaktere Bauweise erreicht werden.

Zwei bevorzugte Ausführungsbeispiele der Erfindung sind in der Zeichnung dargestellt.

Es zeigt

Fig. 1

eine Ansicht des Kreuzgelenkes in gestreckter Lage,

Fig. 2

eine Vorderansicht des Zapfenkreuzes mit Ausnehmungen,

Fig. 3

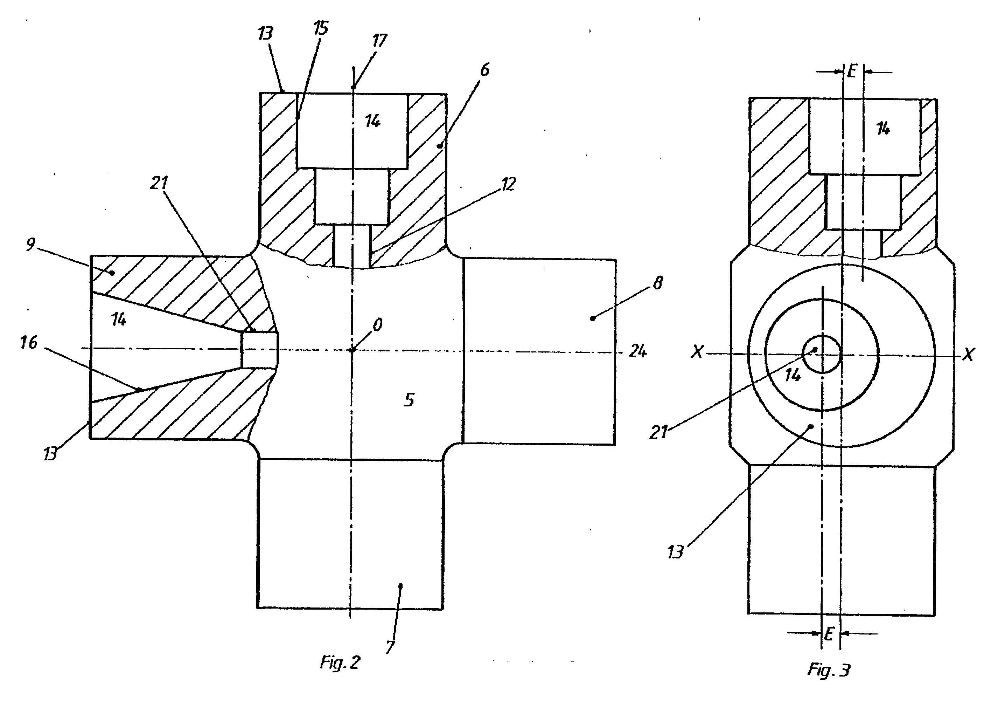

eine Seitenansicht gemäß Fig. 2,

Fig. 4

eine Gelenkgabel im Teilschnitt mit Ausnehmungen und

Fig. 5

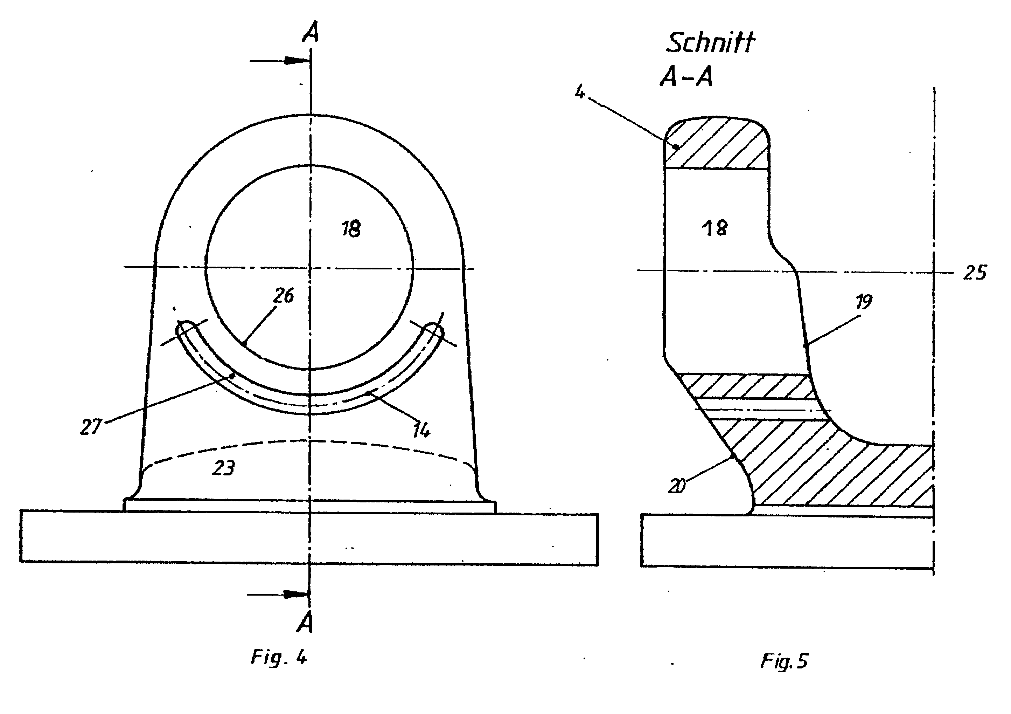

einen Schnitt A-A gemäß Fig. 4.

Das Kreuzgelenk 1 besteht aus den beiden Gelenkgabeln 2, 3, die durch ein Zapfenkreuz 5 miteinander verbunden sind. Das Zapfenkreuz 5 weist vier rechtwinkelig zueinander angeordnete Zapfen 6, 7, 8, 9 auf. Die Zapfen 6 bis 9 weisen eine zylindrische Außenfläche auf, auf welchen Lagerkörper 10, beispielsweise Zylinderrollen abrollend angeordnet sind. Die Lagerkörper 10 selbst sind wiederum in einer Lagerbüchse 11 aufgenommen, welche in einer Bohrung 18 aufgenommen und axial gesichert ist. Die Bohrung 18 befindet sich jeweils in den Gabelarmen 4 der beiden Gelenkgabeln 2, 3.

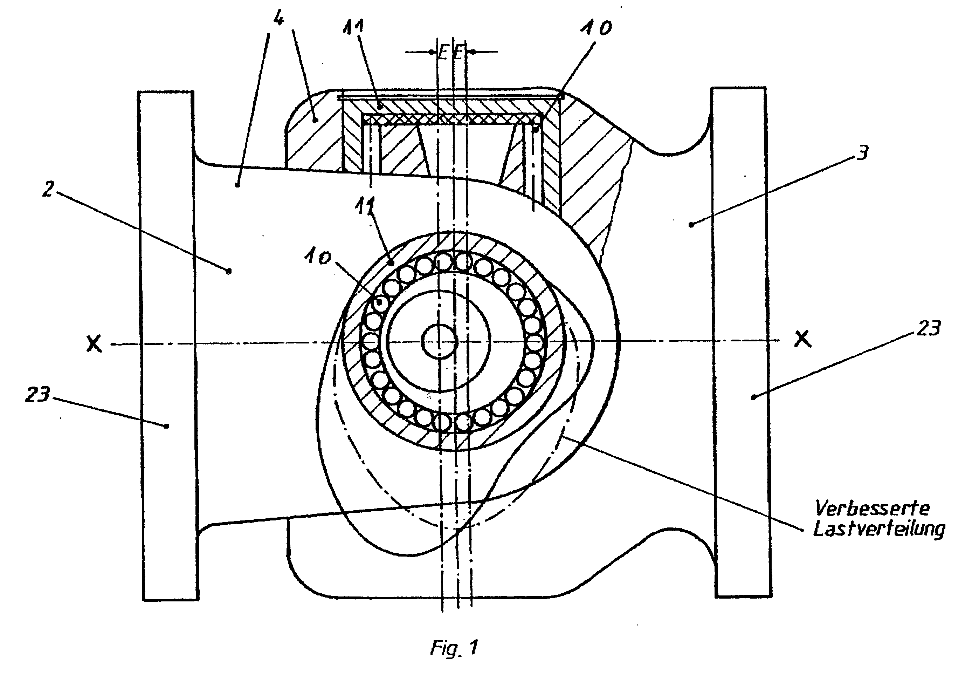

Je zwei Zapfen und zwar die Zapfen 6 und 7 einerseits haben eine gemeinsame Zapfenachse 17 und die beiden Zapfen 8 und 9 andererseits haben ebenfalls eine gemeinsame Zapfenachse 24. Die beiden Zapfen 6 und 7 sind der Gelenkgabel 2 zugeordnet und die Zapfen 8 und 9 der Gelenkgabel 3. Die Bohrung 18 zur Aufnahme der Lagerbüchsen 11 sind im Bereich des freien Endes der Gabelarme 4 der beiden Gelenkgabeln 2 und 3 angeordnet. An ihrem anderen Ende 23 sind die Gabelarme miteinander verbunden. In der gestreckten Lage, daß ist die in Fig. 1 dargestellte Lage, haben die beiden Gelenkgabeln 2 und 3 eine gemeinsame Drehachse x-x. Die Achse der Durchgangsbohrung 18 ist mit 25 bezeichnet. Sie fällt jeweils mit den Achsen 17 und 24 der Zapfen im montierten Zustand des Gelenkes zusammen. Zwischen der Bodenfläche der Lagerbüchse 11 und der Stirnfläche 13 der Zapfen ist eine zusätzliche Anlaufscheibe angeordnet.

Bei der Ausführungsform gemäß den Fig. 2 und 3 sind zwei Varianten dargestellt. Die Mittelebene der beiden Zapfen ist die Ebene, die die Achsen 17 und 24 enthält. Ausgehend von ihrer Stirnfläche 13 sind die Zapfen 6 bis 9 mit Ausnehmungen 14 versehen. Die Ausnehmungen 14 sind exzentrisch zur Mittelebene angeordnet. Dabei sind, wie aus Fig. 3 ersichtlich, beispielsweise die Ausnehmungen 14 der Zapfen 6 und 7 nach rechts von der Mittelebene versetzt angeordnet, während die Ausnehmungen 14 in den Zapfen 8 und 9 nach links von der Mittelbene versetzt angeordnet sind. Das Maß der Versetzung ist für beide gleich. Im zusammengebauten Zustand des Gelenkes erfolgt die Anordnung der Versetzung so, daß sie jeweils in Richtung auf das verbundene Ende 23 der Gelenkgabeln 2 bzw. 3 weist. Obwohl die Ausnehmungen eine beliebige Konfiguration aufweisen können, ist jedoch zu gewährleisten, daß in bezug auf die Achse x-x, daß ist die Achse, die rechtwinkelig zur Mittelebene steht, eine spiegelsymmetrische Ausbildung gegeben ist. Nach einer ersten Ausführungsform kann diese Ausnehmung eine Stufenbohrung sein, so daß in dem Bereich, der der Stirnfläche 13 am nächsten liegt, eine größere Schwächung gegeben ist, als in dem weiter zum Zentrum O hin liegenden Bereich. Der größte Öffnungsdurchmesser ist also im Bereich der Stirnfläche 13 angeordnet. Alternativ zur stufenförmigen Ausbildung kann auch eine konische Bohrung 16 vorgesehen sein. Die konische Bohrung sorgt für einen kontinuierlichen Übergang hinsichtlich der elastischen Verformbarkeit. Bevorzugt sind die Ausnehmungen zweier auf einer Achse 17 bzw 24 liegender Zapfen 6 und 7 bzw. 8 und 9 durch eine Bohrung 12 bzw. 21 miteinander verbunden. Diese bilden den Schmiermittelkanal zur Zuführung des Schmiermittels vom Zentrum des Zapfenkreuzes zu den Stirnflächen 13 und den Lagerkörpern 10.

Bei der Ausführungsform gemäß den Fig. 4 und 5 erfolgt die Schwächung in dem Flächenbereich der Gabelarme, der sich zwischen der Wandung 26 der Bohrung 18 und dem verbundenen Ende 23 der Gabelarme 4 der jeweiligen Gelenkgabel 2 und 3 befindet.

Dabei gehen die Ausnehmungen 14 bevorzugt von der Außenfläche 20 des Gabelarmes aus. Eine besonders gute Wirkung wird dann erzielt, wenn die Ausnehmungen 14 als Kreisringabschnitte ausgebildet sind, Es ist alternativ möglich, die Ausnehmungen 27 je nach Erfordernis über eine endliche Tiefe der radialen Stärke der Gabelarme 4 vorzusehen, oder aber auch eine voll bis zur Innenfläche 19 reichende X-förmige Ausnehmung zu wählen. Ebenso ist es möglich, die Ausnehmungen ausgehend von den Innenflächen 19 vorzusehen. Bei der Ausbildung als Kreisringabschnitte 27 liegt das Zentrum des Kreisringes in der Achse 25 Der bohrung 18. Auch bei dieser Ausbildung ist die Spiegelsymmetrie in bezug auf die Ebene, die Mittenachse 25 der Bohrung 18 enthält gegeben.

Bezugszeichenliste

| | |
|---|---|
| 1 | Gelenk |
| 2, 3 | Gelenkgabel |
| 4 | Gabelarme |
| 5 | Zapfenkreuz |
| 6, 7 | Zapfen |
| 8, 9 | Zapfen |
| 10 | Lagerkörper |
| 11 | Lagerbüchse |
| 12 | Schmiermittelbohrung |
| 13 | Stirnfläche |
| 14 | Ausnehmung |
| 15 | Stufenbohrung |
| 16 | konische Bohrung |
| 17, 24 | Zapfenachse |
| 18 | Bohrung im Gabelarm |
| 19 | Innenfläche der Gabelarme |
| 20 | Außenfläche der Gabelarme |
| 21 | Schmiermittelbohrung |
| 22 | Anlaufscheibe |
| 23 | verbundenes Ende der Gabelarme |
| 25 | Achse der Durchgangsbohrung |
| 26 | Bohrungswandung |
| 27 | Kreisringabschnitt |
| | |
| x-x | Drehachse Gelenkgabel |
| 0 | Zentrum des Zapfenkreuzes |
| E | Exzentrizität |

**Ansprüche**

1. Kreuzgelenk, bestehen aus einer ersten und zweiten Gelenkgabel (2, 3) mit in den Enden der Gabelarme (4) der Gelenkgabeln angeordneten Durchgangsbohrungen, deren Achsen in einer gemeinsamen Ebene liegen, einem vier rechtwinkelig zueinander in einer gemeinsamen Ebene angeordnete Zapfen (6 - 9) aufweisenden Zapfenkreuz (5), auf den Zapfen unter Zwischenschaltung von Lagerkörpern angeordneten Lagerbüchsen (11), wobei jeweils zwei in einer Achse liegende Zapfen (6, 7) mit den Lagerbüchsen in den beiden Bohrungen der ersten Gelenkgabel (2) und die anderen Zapfen (8, 9) mit den Lagerbüchsen in den beiden Bohrungen der zweiten Gelenkgabel (3) aufgenommen und gesichert sind und die Zapfen (6-9) von ihren Stirnflächen (13) ausgehend und in Richtung auf das Zentrum (O) des Zapfenkreuzes (5) sich erstreckende Ausnehmungen (14) aufweisen, welche bei gestrecktem Gelenk spiegelsymmetrisch zur Ebene, die die Drehachsen (x-x bzw. 17, 24) der Gelenkgabeln (2, 3) und der beiden zugehörigen Zapfen (6 und 7 bzw. 8 und 9) enthält, ausgebildet sind, dadurch gekennzeichnet, daß die Ausnehmungen (14) zur Zapfendrehachse (17, 24) jeweils in Richtung der verbundenen Enden (23) der Gabelarme (4) versetzt angeordnet sind.

2. Kreuzgelenk nach Anspruch 1,

   dadurch gekennzeichnet,

   daß die Ausnehmung (14) aus gestuften zylindrischen Bohrungen (15) gebildet ist.

3. Kreuzgelenk nach Anspruch 1,

   dadurch gekennzeichnet,

   daß die Ausnehmung (14) eine konische Bohrung (16) ist, deren größter Durchmesser in der Stirnfläche (13) des zugehörigen Zapfens (6 - 9) liegt.

4. Kreuzgelenk, bestehend aus einer ersten und zweiten Gelenkgabel mit in den Enden der Gabelarme der Gelenkgabeln angeordneten Durchgangsbohrungen, deren Achsen in einer gemeinsamen Ebene liegen, einem vier rechtwinkelig zueinander in einer gemeinsamen Ebene angeordnete Zapfen aufweisenden Zapfenkreuz, auf den Zapfen unter Zwischenschaltung von Lagerkörpern angeordneten Lagerbüchsen, wobei jeweils zwei in einer Achse liegende Zapfen mit den Lagerbüchsen in den beiden Bohrungen der ersten Gelenkgabel und die anderen Zapfen mit den Lagerbüchsen in den beiden Bohrungen der zweiten Gelenkgabel aufgenommen und gesichert sind,

   dadurch gekennzeichnet,

   daß die Gabelarme (4) in den einander zugewandten Flächen (19) und/oder in ihren Außenflächen (20) eine durchgehende oder zwei Ausnehmungen aufweisen, die jeweils spiegelsymmetrisch zur Ebene, die die Drehachsen (x-x bzw. 25) der zugehörigen Gelenkgabel (2, 3) und der beiden Durchgangsbohrungen (18) enthält, ausgebildet sind und in dem Flächenbereich angeordnet sind, der sich zwischen der Bohrungswandung (26) und dem verbundenen Ende (23) der Gabelarme (4) liegt.

5. Kreuzgelenk nach Anspruch 4,

   dadurch gekennzeichnet,

   daß die Ausnehmung (14) als ein oder mehrere konzentrisch zur Achse (25) der Durchgangsbohrung (19) verlaufende Kreisringabschnitte (27) ausgebildet sind.

6. Kreuzgelenk nach Anspruch 4,

   dadurch gekennzeichnet,

   daß die Ausnehmungen (14) als Schlitze ausgebildet sind und von der Innenfläche (19) bis zur Außenfläche (20) der Gabelarme (4) reichen.

**Claims**

1. A universal joint consisting of a first and a second joint yoke (2, 3), with the ends of the yoke arms (4) being provided with through-bores whose axes are positioned in a common plane, having a cross-member (5) comprising four cross arms (6 - 9) arranged at right angles relative to each other and positioned in a common plane, with bearing bushes (11) arranged on the cross arms with bearing members positioned therebetween, with in each case two cross arms (6, 7) positioned in one axis being accommodated and secured via the bearing bushes in the two bores of the first joint yoke (2) and the other cross arms (8, 9) being accommodated and secured via the bearing bushes in the two bores of the second joint yoke (3) and with the cross arms (6 - 9) comprising recesses (14) which start from the end faces (13) of the cross arms, extend in the direction of the centre (0) of the cross member (5) and which, when the joint is in the extended condition, are designed to be mirror-symmetrical relative to the plane containing the axes of rotation (x-x and 17, 24 respectively) of the joint yokes (2, 3) and of the two associated cross arms (6, 7 and 8, 9 respectively),

characterised in

that the recesses (14) are each arranged so as to be offset relative to the axis of rotation of the cross arms (17, 24) in the direction of the connected ends (23) of the yoke arms (4).

2. A universal joint according to claim 1,

characterised in

that the recess (14) is formed of stepped cylindrical bores (15).

3. A universal joint according to claim 1,

characterised in

that the recess (14) is a conical bore (16) whose greatest diameter is positioned in the end face (13) of the associated cross arm (6 - 9).

4. A universal joint consisting of a first and a second joint yoke, with the ends of the yoke arms being provided with through-bores whose axes are positioned in a common plane, having a cross-member comprising four cross arms arranged at right angles relative to each other and positioned in a common plane, with bearing bushes arranged on the cross arms with bearing members positioned therebetween, with in each case two cross arms positioned in one axis being accommodated and secured via the bearing bushes in the two bores of the first joint yoke and the other cross arms being accommodated and secured via the bearing bushes in the two bores of the second joint joke,

characterised in

that the yoke arms (4), in their faces (19) facing each other and/or in their outer faces (20) comprise one continuous or two recesses which are each designed to be mirror-symmetrical relative to the plane containing the axes of rotation (x-x and 25 respectively) of the associated joint yoke (2, 3) and of the two through-bores (18) and which are arranged in the region positioned between the bore wall (26) and the connected ends (23) of the yoke arms (4).

5. A universal joint according to claim 4,

characterised in

that the recess (14) is designed as one or several circular segments (27) extending concentrically relative to the axis (25) of the through-bore (19).

6. A universal joint according to claim 4,

characterised in

that the recesses (14) are designed as slots and extend from the Inner faces (19) as far as the outer faces (20) of the yoke arms (4).

**Revendications**

1. Joint universel comprenant une première et une seconde fourche (2, 3) munies dans les extrémités des bras (4) des fourches de trous de passage dont les axes se trouvent dans un plan commun, un croisillon (5) présentant quatre tourillons (6 à 9) perpendiculaires les uns aux autres et se trouvant dans un plan commun, des coussinets (11) disposés sur les tourillons par l'intermédiaire de paliers, deux tourillons (6, 7) situés sur un axe et leurs coussinets étant logés et bloqués dans les deux trous de la première fourche (2) et les autres tourillons (8, 9) et leurs coussinets étant logés et bloqués dans les deux trous de la seconde fourche (3) et les tourillons (6 à 9) présentant des évidements (14) partant de leurs surfaces frontales (13) et s'étendant en direction du centre (0) du croisillon (5), symétriques, lorsque le joint est déplié, par rapport au plan contenant les axes de rotation (x-x, ou 17, 24) des fourches (2, 3) et des deux tourillons correspondants (6 et 7 ou 8 et 9), caractérisé en ce que les évidements (14) sont désaxés par rapport à l'axe de rotation des tourillons (17, 24) en direction des extrémités reliées (23) des bras (4) des fourches.

2. Joint universel selon la revendication 1,
caractérisé en ce que
l'évidement (14) est formé de trous cylindriques étagés (15).

3. Joint universel selon la revendication 1,
caractérisé en ce que
l'évidement (14) est un trou conique (16) dont le plus grand diamètre se trouve dans la surface frontale (13) du tourillon correspondant (6 à 9).

4. Joint universel comprenant une première et une seconde fourche munies dans les extrémités des bras des fourches de trous de passage dont les axes se trouvent dans un plan commun, un croisillon présentant quatre tourillons perpendiculaires les uns aux autres et se trouvant dans un plan commun, des coussinets disposés sur les tourillons par l'intermédiaire de paliers, deux tourillons situés sur un axe et leurs coussinets étant logés et bloqués dans les deux trous de la première fourche et les autres tourillons et leurs coussinets étant logés et bloqués dans les deux trous de la seconde fourche,
caractérisé en ce que
les bras (4) des fourches présentent dans les surfaces tournées l'une vers l'autre (19) et/ou dans leurs surfaces externes (20) un trou de passage ou deux évidements symétriques par rapport au plan contenant les axes de rotation (x-x ou 25) de la fourche correspondante (2, 3) et les deux trous de passage (18) et sont disposés dans la partie de la surface qui se trouve entre la paroi des trous (26) et l'extrémité reliée (23) des bras (4) des fourches.

5. Joint universel selon la revendication 4,
caractérisé en ce que
l'évidement (14) est formé d'un ou plusieurs segments d'anneau de cercle (27) concentriques par rapport à l'axe (25) du trou de passage (19).

6. Joint universel selon la revendication 4,
caractérisé en ce que
les évidements (14) ont la forme de fentes et vont de la surface interne (19) jusqu'à la surface externe (20) des bras (4) des fourches.

Verbesserte Lastverteilung

Fig. 1

Fig. 3

Fig. 2

Schnitt A–A

Fig. 5

Fig. 4